# EUROPÄISCHE PATENTSCHRIFT

(11) **EP 1 529 660 B1**
(45) Veröffentlichungstag und Bekanntmachung des Hinweises auf die Patenterteilung: **05.11.2008**
(21) Anmeldenummer: 05001621.1
(22) Anmeldetag: 23.11.1998
(51) Int. Cl.: B60C 11/03, B60C 11/11, B60C 11/12

(54) **Laufflächenprofil eines Winterreifens**
Winter tyre tread
Profil de bande de roulement d'un pneu hivernal

(30) Priorität: 04.12.1997 DE 19753819
(43) Veröffentlichungstag der Anmeldung: 11.05.2005
(62) Teilanmeldung aus: 98122227.6
(73) Patentinhaber: Continental Aktiengesellschaft, 30165 Hannover (DE)
(72) Erfinder: Diensthuber, Franz, 30167 Hannover (DE); Peschel, Wolfgang, 85521 Ottobrunn (DE)

(56) Entgegenhaltungen:
- EP-A- 0 696 521
- US-A- 5 660 651

## Beschreibung

Die Erfindung betrifft ein Laufflächenprofil eines Winterreifens. An Winterreifen werden unterschiedliche einander widersprechende Anforderungen gestellt. So soll ein Winterreifen sowohl guten Griff auf Schnee und Eis als auch wie bei Sommerreifen gute Handlingeigenschaften gewährleisten. Diese Zielvorgaben erfordern sich widersprechende Maßnahmen in der Konstruktion des Winterreifens, so dass entweder ein Winterreifen mit guten Wintereigenschaften mit gutem Griff auf Eis und Schnee und vergleichsweise schlechtem Handling auf trockener Straße oder aber ein Sommerreifen mit gutem Handling auf trockener Straße, aber mit vergleichsweise schlechten Wintereigenschaften entsteht.

Ein Winterreifen mit den Merkmalen des Oberbegriffs des Patentanspruchs 1 ist aus der US 5,660,651 A bekannt.

Der Erfindung liegt die Aufgabe zugrunde ein Laufflächenprofil eines Winterreifens zu schaffen, das sowohl gute Wintereigenschaften mit gutem Griff auf Eis und Schnee als auch gutem Handling auf trockener Straße ermöglicht.

Die Aufgabe wird erfindungsgemäß durch Ausbildung des Laufflächenprofils gemäß den Merkmalen des Anspruchs 1 gelöst. Durch die steifere Ausbildung der Profilblockelemente auf der zur Fahrzeugaußenseite weisenden Seite des Laufflächenprofils ist die für das Handling gewünschte Steifigkeit genau in dem für das Handling wichtigen Reifenseite (Handlingseite) und somit gutes Handling auf trockener Straße gewährleistet. In dem für das Handling weniger wichtigen axialen Laufflächenbereich (Winterseite) ist die für guten Griff auf Schnee und Eis wichtige geringe Steifigkeit der Profilblöcke und somit guter Wintergriff gewährleistet.

Durch die Ausbildung gemäß den Merkmalen des Anspruchs 9 wird gerade auf der Winterseite eine besonders hohe Zahl von Traktionskanten geschaffen, wobei die Vielzahl der Lamellen, die für den Strukturfaktor verantwortlich sind, die Profilblöcke in dieser Winterseite noch weicher machen. Die Handlingseite ist durch die geringere Zahl der die Traktionskanten erzeugenden Lamellen steifer. Der Strukturfaktor in Umfangsrichtung ist die Summe der in Umfangsrichtung projezierten Profilblockkanten und Lamellen. Der Strukturfaktor quer zur Umfangsrichtung ist die Summe der quer zur Umfangsrichtung projezierten Profilblockkanten und Lamellen.

Durch die Ausbildung gemäß den Merkmalen des Anspruchs 10 werden auf der Winterseite mehr und kleinere Profilelemente als auf der Handlingseite und somit noch mehr wintergrifferzeugende Profilkanten geschaffen. Auf der Handlingseite ist auch durch diese Maßnahme steifer ausgebildet.

Die freie Durchsicht einer Umfangsnut ist ein Maß für den Eisgriff- und Schneegriff.

Durch die Merkmale des Anspruchs 4 werden die Profilblockelemente außen mit einer harten, abriebreduzierenden Schale und innen mit einem weichen, die Wintereigenschaften verbessernden Kern ausgebildet.

Die Ausbildung gemäß den Merkmalen des Anspruchs 5 ermöglicht eine besonders hohe wirkende Kantenlänge in den Profilblockelementen. Die Ausbildung gemäß den Merkmalen von Anspruch 6 ermöglicht eine besonders hohe wirkende Kantenlänge in den Profilblockelementen der Winterseite und weniger große wirkende Kantenlänge und somit höhere Steifigkeit in den Profilblockelementen der Handlingseite.

Die Ausbildung gemäß den Merkmalen von Anspruch 11 ermöglicht ein sicheres Abfließen von Wasser durch die Profilrillen und sichert somit gute Aquaplaningeigenschaften.

Die Erfindung wird im folgenden anhand der in den Figuren 1 bis 5 dargestellten Ausführungsbeispiele näher erläutert. Hierin zeigen
- Fig. 1: Ausschnitt eines Laufflächenprofils in Draufsicht,
- Fig. 2: Darstellung der Lamelle gemäß Schnitt II-II von Fig.1 zur Erläuterung des Tiefenverlaufs,
- Fig. 3: Darstellung benachbarter Lamellen zur Erläuterung der Verschränkung,
- Fig. 4: Darstellung zur Erläuterung des Querrillenversatzes,
- Fig. 5: Darstellung zur Erläuterung der wirkenden Lamellenlänge eines Profilklotzes.

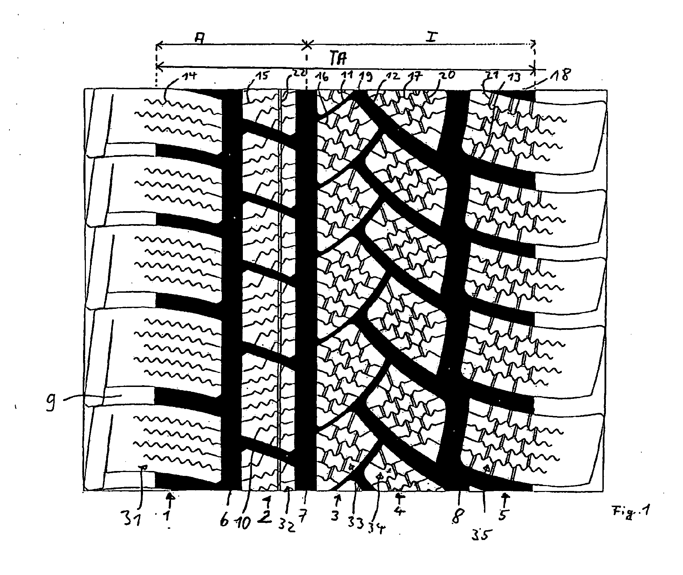

Fig. 1 zeigt einen Umfangsabschnitt eines Laufflächenprofils eines schlauchlosen Winterreifens mit fünf in axialer Richtung nebeneinander angeordneten Profilblockreihen 1,2,3,4 und 5. Die beiden außenliegenden Profilblockreihen 1,5 sind Schulterblockreihen. Die benachbarten Profilblockreihen 1 und 2 bzw 2 und 3 bzw 4 und 5 sind jeweils durch eine Umfangsrille 6 bzw 7 bzw 8 axial voneinander getrennt. Die in Umfangsrichtung hintereinander angeordneten Profilblockelemente 31 der Schulterblockreihe1 sind jeweils durch Querrillen 9 voneinander beabstandet. Die in Umfangsrichtung hintereinander angeordneten Profilblockelemente 35 der Schulterblockreihe 5 sind jeweils durch Querrillen 13 voneinander beabstandet. Die in Umfangsrichtung hintereinander angeordneten Profilblockelemente 32 der Profilblockreihe 2 sind jeweils durch Querrillen 10 voneinander beabstandet. Die in Umfangsrichtung hintereinander angeordneten Profilblockelemente 33 der Profilblockreihe 3 sind jeweils durch Querrillen 11 voneinander beabstandet. Die in Umfangsrichtung hintereinander angeordneten Profilblockelemente 34 der Profilblockreihe 4 sind jeweils durch Querrillen 12 voneinander beabstandet. Die Querrillen11 und 12 trennen auch die Profilblockreihen 3 und 4 in axialer Richtung.

Die Profilblockelemente 31, 32 , 33, 34 und 35 der Profilblockreihen 1,2,3,4 und 5 sind jeweils mit sinusförmig ausgebildeten Lamellen (Feineinschnitten) 14, 15, 16, 17 und 18 ausgebildet.

In Fig.1 ist die Breite der Bodenaufstandsfläche TA , die sich von Schulterprofilblockreihe zu Schulterprofilblockreihe erstreckt, eingezeichnet. Das Profil ist axial in zwei funktional unterschiedliche Bereiche A und I aufgeteilt. Der Bereich A, der sich von der im Betriebszustand eines Fahrzeugrades am Pkw zur Fahrzeugaußenseite weisenden Schulter bis zur Umfangsrille 7 erstreckt, ist konstruktiv speziell für gute Handlingeigenschaften ausgebildet und erstreckt sich axial über 25 und 75 % der Bodenaufstandsfläche, in Fig. 1 über 40 % der Bodenaufstandstandsfläche. Der Bereich I, der sich von der im Betriebszustand eines Fahrzeugrades am Pkw zur Fahrzeuginnenseite weisenden Schulter bis zur Umfangsrille 7 erstreckt, ist konstruktiv speziell für gute Wintergriffeigenschaften ausgebildet.

Die beiden Umfangsrillen 6 und 7 sind sind geradlinig in Umfangsrichtung verlaufend mit gleichbleibender Breite ausgebildet. Sie gewährt guten Wasserablauf. Der freie Nutquerschnitt in Umfangsrichtung entspricht der Breite der Umfangsrille. Die Umfangsrille 8 ist in Umfangsrichtung verlaufend ausgebildet, wobei der Abstand zwischen den benachbarten Profilblockelementen 34 und 35 und somit die Breite im wesentlichen gleich bleibt und der Breite der Umfangsrillen 6 und 7 entspricht. Die Profilblockelemente 34 und 35 reichen mit ihren schräg zur Umfangsrichtung verlaufenden, die Umfangsrille 8 begrenzenden Seiten soweit in die Umfangsrille 8 hinein, dass der freie Nutquerschnitt in Umfangsrichtung (Projektion in Umfangsrichtung) deutlich kleiner als der freie Nutquerschnitt der Umfangsrillen 6 und 7 ist. Der freie Nutquerschnitt ist ein Maß für die in einer Nut vorhandenen Kanten und somit für den Eis- und Schneegriff im Bereich dieser Nut. Je niederer der freie Nutquerschnitt ist desto besser ist der Eis- und Schneegriff. Die Profilblockelemente 33 und 34 der Profilblockreihen 3 und 4 sind so ausgebildet, dass sie in axial in die jeweils benachbarte Profilblockreihe hinein erstrecken. Zwischen diesen Profilblockreihen gibt es keinen freien Nutquerschnitt in Umfangsrichtung. Der freie Nutquerschnitt in Umfangsrichtung ist somit im Bereich 1 kleiner als im Bereich A.

Die Pitchzahl der Profilblockreihen im Bereich I ist höher als die Pitchzahl im Bereich A. Beispielsweise ist die Pitchzahl im Bereich 163 und im Bereich A 59. Auf diese Weise sind im Bereich I über den Umfang verteilt mehr und kürzere Profilblockelemente ausgebildet als im Bereich A. Im Bereich I sind somit mehr Kanten ausgebildet als im Bereich A. Die Profilblöcke des Bereichs A sind größer und steifer ausgebildet als die des Bereichs 1. Die Querrille 10 und die Querrille 9 sind schräg verlaufend mit einem Steigungswinkel > 0° zur Axialrichtung und ausgehend von derMündung der Querrille 10 in die Umfangsrille 7 nach axial außen mit kontinuierlich abnehmender Steigung, d. h. mit abnehmendem Steigungswinkel zur Axialrichtung, ausgebildet. Im Bereich der Umfangsrille 6 sind die beiden Querrillen 10 und 9 zueinander in Umfangsrichtung soweit versetzt, dass sie in ihrer Verlängerung entsprechend dem Steigungsverlauf der Querrille 10 bzw 9 an einer Seitenwand eines Profilblockelementes 31 bzw 32 der jeweils anderen Profilblockreihe 1 bzw 2 enden.

Die Querrille 11 ist schräg verlaufend mit einem Steigungswinkel > 0° zur Axialrichtung und ausgehend von der Umfangsrille 7 nach axial außen mit kontinuierlich zunehmender Steigung, d. h mit zunehmendem Steigungswinkel zur Axialrichtung, ausgebildet.

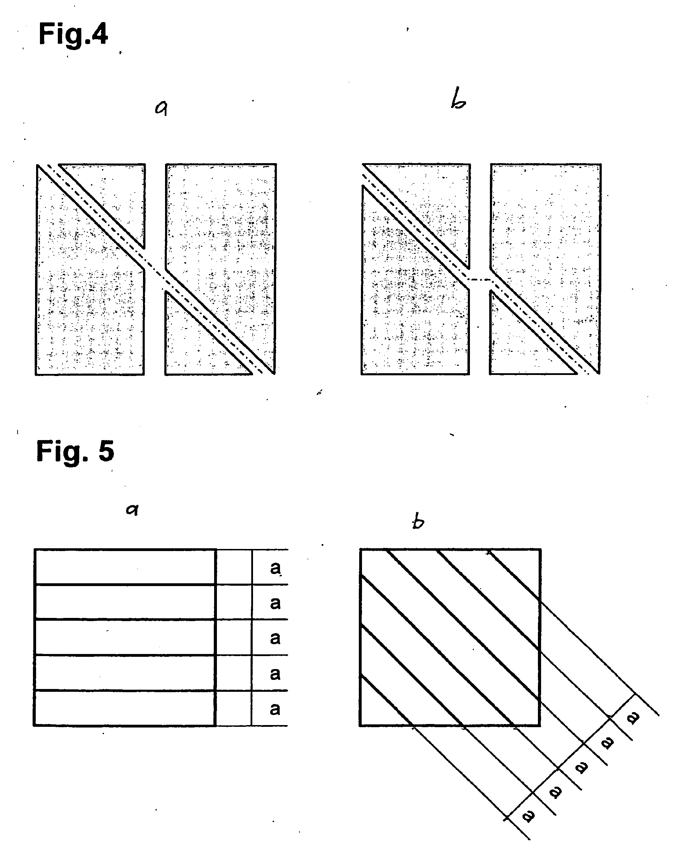

Die Querrille 12 und die Querrille 13 sind schräg verlaufend mit einem Steigungswinkel < 0° zur Axialrichtung und ausgehend von der stumpfen Mündung der Querrille 12 in die Querrille 11 nach axial außen mit kontinuierlich abehmender negativer Steigung, d. h mit abnehmendem negativem Steigungswinkel zur Axialrichtung, ausgebildet. Im Bereich der Umfangsrille 8 sind die beiden Querrillen 12 und 13 zueinander in Umfangsrichtung soweit versetzt, dass sie in gleicher Umfangsposition in die Umfangsrille 8 münden. Hierdurch wird - wie in Fig.4b dargestellt ist - der Wasserableitwiderstand gegenüber einer unversetzten Ausführung gemäß Fig.4a.reduziert.

Die Profilblockelemente 31 bzw 35 der Schulterblockreihen 1 und 5 sind jeweils mit mehreren parallel zueinander und zu den jeweiligen Querrillen 9 bzw 13 ausgebildeten Lamellen 14 bzw 18 ausgebildet. Die Lamellen 14 bzw 18 erstrecken sich jeweils ausgehend von der benachbarten Umfangsrille 6 bzw 8 bis außerhalb der axialen Erstreckung der Bodenaufstandsfläche TA.

Die Profilblockelemente 32 , 33 und 34 der Profilblockreihen 2,3 und 4 sind jeweils mit mehreren parallel zu einander ausgebildeten Lamellen 15, 16 und 17 ausgebildet, die sich über den jeweiligen gesamten Profilblock erstrecken und auf beiden Seiten jeweils in einer Umfangs- bzw Querrille münden.

Die Lamellen 15, 16, 17 sind dabei, wie in Figur 5 an einem zur Vereinfachung quadratischen Profilblockelement schematisch dargestellt, ausgebildet. Die Lamellen sind mit einem Winkel zwischen 70 und 110° zur Hauptdiagonalen ausgebildet, wie in Fig.5b dargestellt. Die Gesamtlamellenlänge des Profilblockelementes ist hierdurch größer als bei Ausbildung der Lamellen mit einem 45° - Winkel zur Hauptdiagonalen, wie in Fig.5a dargestellt ist.

Die Lamellen 14, 15, 16, 17, 18 sind in ihren jeweiligen Profilblockelementen jeweils so angeordnet, dass der Abstand zwischen den einzelnen benachbarten Lamellen innerhalb eines Profilblockelementes im wesentlichen gleich ist und dass der Rand des Profilblockelementes nebender außenliebenden Lamellen in senkrechter Richtung zur Lamellenausrichtung eine maximale Breite aufweist, die um 7 bis 15 %größer ist als die Breite der Abstände zwischen den Lamellen dieses Profilblockelementes.

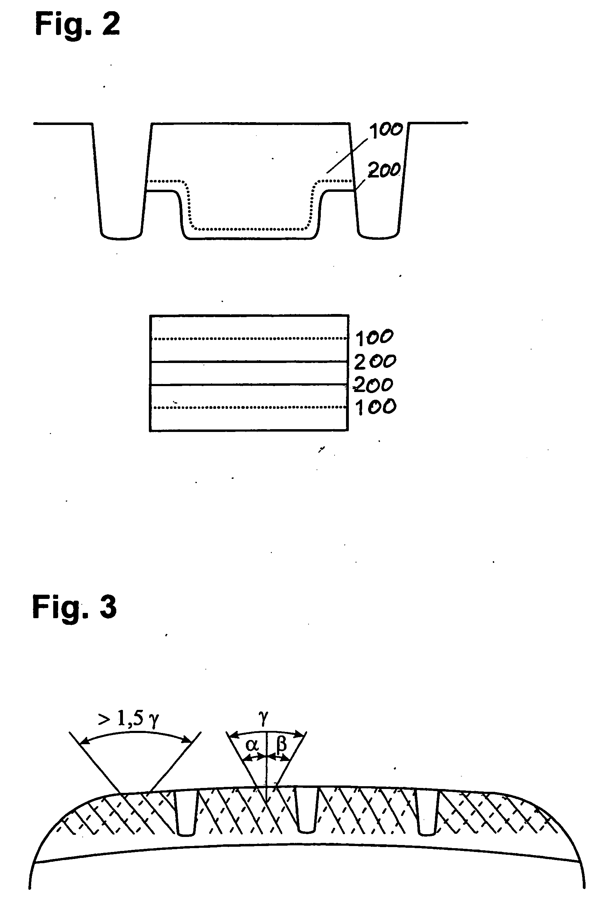

Der Tiefenverlauf der Lamellen 14,15,16,17,18 ist , wie in Fig.2 an einem beispielhaft dargestellten Profilblockelement mit Lamellen 100 und 200 schematisch dargestellt ist, ausgebildet. Die Lamellen sind jeweils mit im wesentlichen konstanter Tiefe ausgebildet, die jedoch im Randbereich des Profilblocks um 35 bis 65 % reduziert ist. Die Lamellen 100,die dem Profilblockrand am Nächsten liegen sind weniger tief ausgebildet als die Lamellen 200 im innern des Profilblockelementes.

Der Randbereich ist zwischen 3 und 6 mm dick

Die Lamellen sind 14,15,16,17,18 mit Ausnahme des Randbereichs der jeweiligen Profilblockelemente jeweils mit einem sinusförmigen Verlauf in der Klotzoberfläche ausgebildet. Auch entlang ihrer Tiefenerstreckung ist der Verlauf in Schnittebenen wie in der Patentanmeldung P 196 50 702.2 beschrieben parallel zur Profilblockelementoberfläche sinusförmig jedoch mit zunehmender Tiefe mit zunehmender Phasenverschiebung. Die Phasenverschiebung in Tiefenrichtung erfolgt entlang einer Geraden, die mit der Radialen einen Winkel >0° einschließt. Wie in Fig. 3 dargestellt ist, findet bei zwei benachbarten Lamellen eines Profilblockelementes die Phasenverschiebung entlang zweier unterschiedlicher Geraden mit zwei entgegengesetzten Steigungsrichtungen statt. Die Steigungswinkel der beiden Geraden zur Radialen in einer Ebene sind Alpha und Beta. Die Lamellen eines Profilblockelementes sind wie in der Patentanmeldung P 196 50 702.2 beschrieben alternierend mit einer Phasenverschiebung mit dem Steigungswinkel Alpha und mit einer Phasenverschiebung um den Steigungswinkel Beta ausgebildet. Die Profilblockelemente werden hierdurch verschränkt. Der Summenwinkel Gamma = Alpha + Beta ist ein Maß für die Verschränkung. Gamma ist in den Profilblockelementen 35 der Profilblockreihe 5 größer als in den Profilblockelementen 31,32,33,34 der Profilblockreihen 1,2,3,4. Beispielsweise beträgt Gamma in den Profilblockelementen 35 40° und in den Profilblockelementen 31,32,33,34 20°.

Die Breite der Lamellen 14 bis 18 beträgt 0,3 bis 0,6 mm , beispielsweise 0,4 mm.

Die Breite der Querrillen 9,10,12,13 beträgt 3 bis 8 mm.
Die Breite der schmalen Querrillen 11 beträgt 1 bis 2 mm, beispielsweise 1,1 mm.

Zur Entlüftung der Lamellen 16, 17, 18 sind in den Profilblockelementen 33,34,35 zusätzlich quer zur Lamellenrichtung verlaufende Entlüftungslamellen 13 mit einer Breite von 0,8 bis 1,3 mm ausgebildet, die die benachbarten Lamellen miteinander un die Randlamellen mit den angrenzenden Rillen verbinden. Lufteinschlüsse werden hierdurch vermieden.

In der Profilblockreihe 2 ist zuätzlich eine geradlinige umfangsgerichtete Rille 22 mit 1 bis 2 mm Breite und mit 1,5 mm Tiefe ausgebildet.

Der Winterreifen ist ein schlauchloser Fahrzeugluftreifen bekannter radialer Bauart mit Gürtel mit Festigkeitsträgern aus Stahl oder Aramid und - falls erforderlich mit zusätzlicher bekannter Gürtelbandage aus wendelförmig gewickeltem oder nebeneinander aufgelegtem Bandagematerial mit bekannten geeigneten Festigkeitsträgern - beispielsweise Nylon.

### Bezugszeichenliste

- 1: Profilblockreihe
- 2: Profilblockreihe
- 3: Profilblockreihe
- 4: Profilblockreihe
- 5: Profilblockreihe
- 6: Umfangsrille
- 7: Umfangsrille
- 8: Umfangsrille
- 9: Querrille
- 10: Querrille
- 11: Querrille
- 12: Querrille
- 13: Querrille
- 14: Lamelle
- 15: Lamelle
- 16: Lamelle
- 17: Lamelle
- 18: Lamelle
- 19: Lamelle
- 20: Lamelle
- 21: Lamelle
- 22: Umfangslamelle
- 31: Profilblockelement
- 32: Profilblockelement
- 33: Profilblockelement
- 34: Profilblockelement
- 35: Profilblockelement
- 100: Lamelle
- 200: Lamelle

## Patentansprüche

1. Laufflächenprofil eines Winterreifens für Fahrzeuge mit wenigstens zwei außerhalb der Fahrzeuglängsachse ausgebildeten Fahrzeugrädern
- mit in axialer Richtung von Reifenschulter zu Reifenschulter verteilt angeordneten und durch Umfangsrillen (6,7,8) axial voneinander beabstandeten in Umfangsrichtung ausgerichteten Profilblockreihen (1 - 5),
- bei dem eine erste Umfangsrille (7) das Laufflächenprofil in zwei funktional unterschiedlich ausgebildete Bereiche (A;I) aufteilt, die sich axial jeweils von der zugehörigen Reifenschulter bis zu dieser ersten Umfangsrille (7) erstrecken,
- wobei die Profilblockelemente (31, 32) in dem axialen Bereich (A), der sich von dieser Umfangsrille (7) bis zur im Betriebszustand des Reifens am Fahrzeug zur Fahrzeugaußenseite weisenden Schulter erstreckt, mit einer höheren Querschubsteifigkeit ausgebildet sind als die Profilblockelemente (33, 34, 35) in dem axialen Bereich (1), der sich von dieser ersten Umfangsrille (7) bis zur im Betriebszustand des Reifens am Fahrzeug zur Fahrzeuginnenseite weisenden Schulter erstreckt, wobei sowohl in dem axialen Bereich (I) , der sich von dieser ersten Umfangsrille bis zur im Betriebszustand des Reifens am Fahrzeug zur Fahrzeuginnenseite weisenden Schulter erstreckt, als auch in dem axialen Bereich (A), der sich von dieser ersten Umfangsrille (7) bis zur im Betriebszustand des Reifens am Fahrzeug zur Fahrzeugaußenseite weisenden Schulter erstreckt, jeweils wenigstens eine weitere Umfangsrille (8;6) ausgebildet ist, die jeweils zwei Profilblockreihen (5, 4; 2, 1) voneinander trennt, wobei wenigstens im axialen Bereich (A) Profilblockreihen (1,2) aus in Umfangsrichtung hintereinander angeordneten und durch schräg verlaufende Querrillen (9, 10) voneinander beabstandeten Profilblockelementen (31, 32) ausgebildet sind, so dass die Profilblockelemente (31,32) mit schräg verlaufenden, die Profilblockelemente (31, 32) in Umfangsrichtung begrenzenden Querkanten ausgebildet sind, **dadurch gekennzeichnet, dass** die Querrillen (9; 10) im Bereich ihrer Mündung in die Umfangsrille (6) zueinander in Umfangsrichtung soweit versetzt sind, dass sie in ihrer Verlängerung entsprechend dem Steigungsverlauf der jeweiligen Querrille (9;10) an einer Seitenwand eines Profilblockelementes (31; 32) der jeweils anderen Profilblockreihe (1; 2) stumpf enden.

2. Asymmetrisches Laufflächenprofil eines Winterreifens gemäß den Merkmalen des Anspruchs 1, **dadurch gekennzeichnet, dass** die Profilblockelemente (31, 32 , 33, 34, 35) der Profilblockreihen (1,2,3,4, 5) jeweils mit Lamellen (14, 15, 16, 17, 18) versehen sind, welche mit einem sinusförmigen Verlauf in der Profilblockelementoberfläche ausgebildet sind.

3. Asymmetrisches Laufflächenprofil eines Winterreifens gemäß den Merkmalen von einem oder mehreren der vorangegangenen Ansprüche, **dadurch gekennzeichnet, dass** die Profilblockelemente (32 , 33, 34) der Profilblockreihen (2,3,4) jeweils mit mehreren parallel zu einander ausgebildeten Lamellen (15, 16, 17) ausgebildet sind, die sich über den jeweiligen gesamten Profilblock erstrecken und auf beiden Seiten jeweils in einer Umfangsrille (6,7,8) und/oder einer Querrille (9 - 13) münden.

4. Asymmetrisches Laufflächenprofil eines Winterreifens gemäß den Merkmalen von einem oder mehreren der vorangegangenen Ansprüche,
- wobei Profilblockelemente (33,34,35) der Profilblockreihen (3,4,5) in dem axialen Bereich (I), der sich von dieser ersten Umfangsrille (7) bis zur im Betriebszustand des Reifens am Fahrzeug zur Fahrzeuginnenseite weisenden Schulter erstreckt, mit mehreren voneinander beabstandeten, sich über das Profilblockelement (33,34,35) erstreckenden Lamellen (16 -21) ausgebildet sind,
- wobei der Tiefenverlauf der Lamellen eines Profilblockelementes durch das Profilblockelement mit einer Tiefe am Rand des Profilblockelementes - insbesondere 10 bis 20 % - kleiner als zwischen den Rändern im Innern des Profilblockelements ausgebildet ist.

5. Asymmetrisches Laufflächenprofil eines Winterreifens gemäß den Merkmalen von einem oder mehreren der vorangegangenen Ansprüche,
- bei dem zumindest eine Profilblockreihe aus in Umfangsrichtung hintereinander angeordneten und durch schräg verlaufende Querrillen voneinander beabstandete Profilblockelemente ausgebildet sind, so dass die Profilblockelemente mit schräg verlaufenden, die Profilblockeiemente in Umfangsrichtung begrenzenden Querkanten ausgebildet sind, und
- bei dem die Profilblockelemente dieser Profilblockreihe in axialer Richtung mit seitlich die Profilblockelemente begrenzenden Längskanten ausgebildet sind,
- wobei die Profilblockelement der Profilblockreihe mit mehreren voneinander beabstandeten, sich über das Profilblockelement erstreckenden Lamellen ausgebildet sind, wobei die Lamellen in ihrer Ausrichtung einen Winkel zwischen 80 und 110° zu der längeren Diagonalen des durch die Querkanten und die Längskanten gebildeten Trapezes einschließen.

6. Asymmetrisches Laufflächenprofil eines Winterreifens gemäß den Merkmalen von einem oder mehreren der vorangegangenen Ansprüche,
- bei dem die Profilblockreihen in den Reifenschultern und wenigstens eine weitere Profilblockreihe ausgebildet ist, die zwischen den Reifenschultern angeordnet ist, wobei die Profilblockreihen jeweils aus in Umfangsrichtung hintereinander angeordneten und durch schräg verlaufende Querrillen voneinander beabstandete Profilblockelemente ausgebildet sind, so dass die Profilblockelemente mit schräg verlaufenden, die Profilblockelemente in Umfangsrichtung begrenzenden Querkanten ausgebildet sind,
- bei dem die Profilblockelemente der Profilblockreihen in axialer Richtung mit seitlich die Profilblockelemente begrenzenden Längskanten ausgebildet sind,
- wobei die Profilblockelement der Profilblockreihen mit mehreren voneinander beabstandeten, sich über das Profilblockelement erstreckenden Lamellen ausgebildet sind,
- wobei die Lamellen der Schulterprofilblockreihen in ihrer Ausrichtung parallel zu den die Profilblockelemente in der jeweiligen Schulterprofilblockreihe in Umfangsrichtung begrenzenden Querrille ausgebildet sind, und
- wobei die Lamellen der zwischen den Schulterprofilblockreihen ausgebildeten Profilblockreihe in ihrer Ausrichtung einen Winkel zwischen 80 und 110° zu der Hauptdiagonalen des durch die Querkanten und die Längskanten gebildeten Trapezes einschließen.

7. Asymmetrisches Laufflächenprofil eines Winterreifens gemäß den Merkmalen von einem oder mehreren der vorangegangenen Ansprüche, **dadurch gekennzeichnet, dass** von Umfangsrillen (7,8) begrenzte Profilblockelemente (33,34) zueinander durch Querrillen (11,12) begrenzt sind, wobei die Querrillen (11) schräg verlaufen und eine Breite von 1 bis 2 mm aufweisen, und wobei die Querrillen (12) schräg verlaufen und eine Breite von 3 bis 8 mm aufweisen.

8. Asymmetrisches Laufflächenprofil eines Winterreifens gemäß den Merkmalen von einem oder mehreren der vorangegangenen Ansprüche, **dadurch** gekennzeichet, dass die Profilblockelemente (33,34) der Profilblockreihen (3,4) so ausgebildet sind, dass sie sich axial in die jeweils benachbarte Profilblockreihe (3;4) hinein erstrecken, so dass zwischen diesen Profilblockreihen (3,4) kein freier Nutquerschnitt in Umfangsrichtung besteht.

9. Asymmetrisches Laufflächenprofil eines Winterreifens gemäß den Merkmalen des Anspruchs 1,
- wobei sowohl der Strukturfakror längs in Umfangsrichtung als auch der Strukturfaktor quer zur Umfangsrichtung in den Profilblockelementen in dem axialen Bereich, der sich von dieser Umfangsrille bis zur im Betriebszustand des Reifens am Fahrzeug zur Fahrzeuginnenseite weisenden Schulter erstreckt, zwischen 10 und 50 % höher ist als in den Profilblockelementen in dem axialen Bereich, der sich von dieser ersten Umfangsrille bis zur im Betriebszustand des Reifens am Fahrzeug zur Fahrzeugaußenseite weisenden Schulter erstreckt.

10. Asymmetrisches Laufflächenprofil eines Winterreifens gemäß den Merkmalen des Anspruchs 1 oder 2,
- bei dem die Pitchzahl in dem axialen Bereich, der sich von dieser ersten Umfangsrille bis zur im Betriebszustand des Reifens am Fahrzeug zur Fahrzeuginnenseite weisenden Schulter erstreckt, größer ist als in dem axialen Bereich, der sich von dieser ersten Umfangsrille bis zur im Betriebszustand des Reifens am Fahrzeug zur Fahrzeugaußenseite weisenden Schulter erstreckt.

11. Asymmetrisches Laufflächenprofil eines Winterreifens gemäß den Merkmalen von einem oder mehreren der vorangegangenen Ansprüche,
- wobei in dem axialen Bereich, der sich von dieser ersten Umfangsrille bis zur im Betriebszustand des Reifens am Fahrzeug zur Fahrzeuginnenseite weisenden Schulter erstreckt, eine weitere Profilblockreihe ausgebildet ist, die durch eine Umfangsrille bzw. Umfangsnut von der Profilblockreihe, die in der im Betriebszustand des Reifens am Fahrzeug zur Fahrzeuginnenseite weisenden Schulter, ausgebildet ist betrennt ist,
- wobei diese beiden benachbarten Profilblockreihen jeweils aus in Umfangsrichtung hintereinander angeordneten und durch schräg verlaufende Querrillen voneinander beabstandete Profilblockelemente ausgebildet sind, so dass die Profilblockelemente mit schräg verlaufenden, die Profilblockelemente in Umfangsrichtung-begrenzenden Querkanten ausgebildet sind, wobei sich die Querrillen über beide Profilblockreihen ausgehend von der Reifenschulter nach axial innen hin unter stetiger Steigung erstrecken, wobei die Querrillen beim Übergang durch die Umfangsrille in Umfangsrichtung derart versetzt zu einander ausgebildet sind, dass das zur Umfangsrille weisende Ende der Querrille in der Schulterblockreihe die gleiche Umfangsposition wie das zur Umfangsrille weisende Ende der Querrille in der weiteren Profilblockreihe einnimmt.

## Claims

1. Cap tread of a winter tyre for vehicles having at least two vehicle wheels which are formed outside the longitudinal axis of the vehicle,
- having tread block rows (1-5) which are arranged distributed from tyre shoulder to tyre shoulder in the axial direction and oriented in the circumferential direction spaced apart from one another axially by circumferential grooves (6, 7, 8),
- in which a first circumferential groove (7) divides the cap tread into two areas (A; I) which have functionally different designs and which each extend axially from the associated tyre shoulder as far as this first circumferential groove (7),
- in which the tread block elements (31, 32) are formed with a higher lateral compressive strength in the axial area (A), which extends from this circumferential groove (7) as far as the shoulder which points to the outside of the vehicle in the operating state of the tyre on the vehicle, than the tread block elements (33, 34, 35) in the axial area (I) which extends from this first circumferential groove (7) as far as the shoulder which points to the inside of the vehicle in the operating state of the tyre on the vehicle, in which at least one further circumferential groove (8; 6), which divides two tread block rows (5, 4; 2, 1) from one another in each case, is respectively formed both in the axial area (I) which extends from this first circumferential groove as far as the shoulder which points to the inside of the vehicle in the operating state of the tyre on the vehicle and also in the axial area (A) which extends from this first circumferential groove (7) as far as the shoulder which points to the outside of the vehicle in the operating state of the tyre on the vehicle, in which, at least in the axial area (A), tread block rows (1, 2) composed of tread block elements (31, 32) which are arranged one behind the other in the circumferential direction and are spaced apart from one another by obliquely extending transverse grooves (9, 10) are formed so that the tread block elements (31, 32) are formed with obliquely extending transverse edges which bound the tread block elements (31, 32) in the circumferential direction, **characterized in that** the transverse grooves (9; 10) are offset with respect to one another in the circumferential direction in the region of their junction with the circumferential groove (6) to such an extent that in their extension corresponding to the profile of the gradient of the respective transverse groove (9; 10) they end flush with a side wall of a tread block element (31; 32) of the respective other tread block row (1; 2).

2. Asymmetrical cap tread of a winter tyre according to the features of Claim 1, **characterized in that** the tread block elements (31, 32, 33, 34, 35) of the tread block rows (1, 2, 3, 4, 5) are each provided with laminations (14, 15, 16, 17, 18) which are formed with a sinusoidal tread in the tread block element surface.

3. Asymmetrical cap tread of a winter tyre according to the features of one or more of the preceding claims, **characterized in that** the tread block elements (32, 33, 34) of the tread block rows (2, 3, 4) are each formed with a plurality of laminations (15, 16, 17) which are formed parallel to one another and which extend over the respective entire tread block and open into a circumferential groove (6, 7, 8) and/or a transverse groove (9-13) on each of the two sides.

4. Asymmetrical cap tread of a winter tyre according to the features of one or more of the preceding claims,
- in which tread block elements (33, 34, 35) of the tread block rows (3, 4, 5) are formed in the axial area (I) which extends from this first circumferential groove (7) as far as the shoulder which points to the inside of the vehicle in the operating state of the tyre on the vehicle with a plurality of laminations (16-21) which are spaced apart from one another and extend over the tread block element (33, 34, 35),
- with the depth tread of the laminations of a tread block element being formed by the tread block element with a depth at the edge of the tread block element which is in particular 10 to 20% less than between the edges in the interior of the tread block element.

5. Asymmetrical cap tread of a winter tyre according to the features of one or more of the preceding claims,
- in which at least one tread block row is formed from tread block elements which are arranged one behind the other in the circumferential direction and are spaced apart from one another by obliquely extending transverse grooves, in such a way that the tread block elements are formed with obliquely extending transverse edges which bound the tread block elements in the circumferential direction, and
- in which the tread block elements of this tread block row are formed in the axial direction with longitudinal edges which laterally bound the tread block elements,
- in which the tread block elements of the tread block row are formed with a plurality of laminations which are spaced apart from one another and extend over the tread block element, in which the laminations enclose, in their orientation, an angle between 80 and 110° with respect to the longer diagonal of the trapezium which is formed by the transverse edges and the longitudinal edges.

6. Asymmetrical cap tread of a winter tyre according to the features of one or more of the preceding claims,
- in which the tread block rows are formed in the tyre shoulders and at least one further tread block row which is arranged between the tyre shoulders is formed, in which the tread block rows are each formed from tread block elements which are arranged one behind the other in the circumferential direction and are spaced apart from one another by obliquely extending transverse grooves so that the tread block elements are formed with obliquely extending transverse edges which bound the tread block elements in the circumferential direction,
- in which the tread block elements of the tread block rows are formed in the axial direction with longitudinal edges which laterally bound the tread block elements,
- in which the tread block elements of the tread block rows are formed with a plurality of laminations which are spaced apart from one another and extend over the tread block element,
- in which the laminations of the shoulder tread block rows are formed, in their orientation, parallel to the transverse grooves which bounds the tread block elements in the respective shoulder tread block row in the circumferential direction, and
- in which the laminations of the tread block row which is formed between the shoulder tread block rows enclose, in their orientation, an angle between 80 and 110° with respect to the main diagonal of the trapezium which is formed by the transverse edges and the longitudinal edges.

7. Asymmetrical cap tread of a winter tyre according to the features of one or more of the preceding claims, **characterized in that** tread block elements (33, 34) which are bounded by circumferential grooves (7, 8) are bounded with respect to one another by transverse grooves (11, 12), with the transverse grooves (11) extending obliquely and having a width of 1 to 2 mm, and in which the transverse grooves (12) extend obliquely and have a width of 3 to 8 mm.

8. Asymmetrical cap tread of a winter tyre according to the features of one or more of the preceding claims, **characterized in that** the tread block elements (33, 34) of the tread block rows (3, 4) are formed in such a way that they extend axially into the respectively adjacent tread block row (3; 4) so that there is no free groove cross section in the circumferential direction between these tread block rows (3, 4).

9. Asymmetrical cap tread of a winter tyre according to the features of Claim 1,
- in which both the structure factor longitudinally in the circumferential direction and the structure factor transversely with respect to the circumferential direction in the tread block elements are between 10 and 50% higher in the axial area which extends from this circumferential groove as far as the shoulder which points to the inside of the vehicle in the operating state of the tyre on the vehicle than in the tread block elements in the axial area which extends from this first circumferential groove as far as the shoulder which points to the outside of the vehicle in the operating state of the tyre on the vehicle.

10. Asymmetrical cap tread of a winter tyre according to the features of Claim 1 or 2,
- in which the pitch number is greater in the axial area which extends from this first circumferential groove as far as the shoulder which points to the inside of the vehicle in the operating state of the tyre on the vehicle than in the axial area which extends from this first circumferential groove as far as the shoulder which points to the outside of the vehicle in the operating state of the tyre on the vehicle.

11. Asymmetrical cap tread of a winter tyre according to the features of one or more of the preceding claims,
- in which a further tread block row is formed in the axial area which extends from this first circumferential groove as far as the shoulder which points to the inside of the vehicle in the operating state of the tyre on the vehicle, said tread block row being separated by a circumferential groove from the tread block row which is formed in the shoulder which points to the inside of the vehicle in the operating state of the tyre on the vehicle,
- in which these two adjacent tread block rows are each formed from tread block elements which are arranged one behind the other in the circumferential direction and are spaced apart from one another by obliquely extending transverse grooves, so that the tread block elements are formed with obliquely extending transverse edges which bound the tread block elements in the circumferential direction, in which the transverse grooves extend axially inwards via both tread block rows starting from the tyre shoulder with a continuous gradient, in which the transverse grooves are formed offset with respect to one another in the circumferential direction at the passage through the circumferential groove in such a way that the end of the transverse groove which points to the circumferential groove assumes the same circumferential position in the shoulder block row as the end of the transverse groove which points to the circumferential groove assumes in the other tread block row.

## Revendications

1. Profil de surface de roulement d'un pneu d'hiver pour des véhicules dont au moins deux roues de véhicule sont situées à l'extérieur de l'axe longitudinal du véhicule,
- lequel profilé présente des rangées (1 à 5) de blocs profilés répartis dans la direction axiale entre un épaulement du pneu à l'autre épaulement du pneu, alignés dans le sens de la périphérie et séparés les uns des autres dans le sens axial par des rainures périphériques (6, 7, 8),
- dans lequel une première rainure périphérique (7) divise le profilé de surface de roulement en deux zones (A; I) à fonctions différentes qui s'étendent toutes deux axialement entre l'épaulement associé du pneu et cette première rainure périphérique (7),
- les éléments (31, 32) de bloc profilé de la partie axiale (A) qui s'étend entre cette rainure périphérique (7) et l'épaulement tourné vers le côté extérieur du véhicule lorsque le pneu est en position de fonctionnement sur le véhicule ont une rigidité en poussée transversale plus élevée que les éléments (33, 34, 35) de bloc profilé de la partie axiale (I) qui s'étend entre cette première rainure périphérique (7) et l'autre épaulement tourné vers le côté intérieur du véhicule lorsque le pneu est en position de fonctionnement sur le véhicule, tandis qu'au moins une autre rainure périphérique (8; 6) est formée et sépare l'une de l'autre deux rangées (5, 4; 2, 1) de blocs profilés aussi bien dans la partie axiale (1) qui s'étend entre cette première rainure périphérique et l'épaulement tourné vers le côté intérieur du véhicule lorsque le pneu est en position de fonctionnement que dans la partie axiale (A) qui s'étend entre cette première rainure périphérique (7) et l'épaulement tourné vers le côté extérieur du véhicule lorsque le pneu est en position de fonctionnement sur le véhicule, et qu'au moins dans la partie axiale (A), les rangées (1, 2) de blocs profilés sont formées par des éléments (31, 32) de bloc profilé disposés les uns derrière les autres dans le sens périphérique et séparés les uns des autres par des rainures transversales (9, 10) qui s'étendent obliquement de telle sorte que les bords transversaux des éléments (31, 32) de bloc profilé s'étendent obliquement et délimitent les éléments (31, 32) des blocs profilés dans la direction périphérique,
**caractérisé en ce que**, dans la zone où elles débouchent dans la rainure périphérique (6), les rainures transversales (9; 10) sont décalées les unes par rapport aux autres dans la direction périphérique de telle sorte que dans leur prolongement qui correspond à l'obliquité de la rainure transversale (9; 10) correspondante, elles se terminent en venant buter contre une paroi latérale d'un élément (31; 32) de bloc profilé de l'autre rangée (1; 2) de blocs profilés.

2. Profilé asymétrique de surface de roulement pour un pneu d'hiver selon les caractéristiques de la revendication 1, **caractérisé en ce que** les éléments (31, 32, 33, 34, 35) de bloc profilé des rangées (1, 2, 3, 4, 5) de blocs profilés sont tous dotés de lamelles (14, 15, 16, 17, 18) qui sont réalisés sous forme sinusoïdale dans la surface de l'élément du bloc profilé.

3. Profilé asymétrique de surface de roulement pour un pneu d'hiver selon les caractéristiques d'une ou plusieurs des revendications précédentes, **caractérisé en ce que** les éléments (32, 33, 34) de bloc profilé des rangées (2, 3, 4) de blocs profilés sont tous configurés avec plusieurs lamelles (15, 16, 17) parallèles les unes autres qui s'étendent sur tout le bloc profilé correspondant et qui débouchent toutes des deux côtés dans une rainure périphérique (6, 7, 8) et/ou dans une rainure transversale (9 à 13).

4. Profil asymétrique de surface de roulement d'un pneu d'hiver selon les caractéristiques d'une ou plusieurs des revendications précédentes, **caractérisé en ce que**
- dans la partie axiale (I) qui s'étend entre la première rainure périphérique (7) et l'épaulement tourné vers le côté intérieur du véhicule lorsque le pneu est en position de fonctionnement sur le véhicule, les éléments (33, 34, 35) de bloc profilé des rangées (3, 4, 5) de blocs profilés sont configurés avec plusieurs lamelles (16 à 21) situées à distance les unes autres et qui s'étendent sur l'élément (33, 34, 35) de bloc profilé,
- et **en ce que** la profondeur des lamelles d'un élément de bloc profilé qui traversent un élément de bloc profilé est plus petite sur le bord de l'élément de bloc profilé, et en particulier de 10 à 20 %, que leur profondeur entre les bords et à l'intérieur de l'élément de bloc profilé.

5. Profilé asymétrique de surface de roulement d'un pneu d'hiver selon les caractéristiques d'une ou plusieurs des revendications précédentes,
- dans lequel au moins une rangée de blocs profilés est formée d'éléments de bloc profilé disposés les uns derrière les autres dans la direction périphérique et séparés les uns des autres par des rainures transversales qui s'étendent obliquement de telle sorte que les bords transversaux des éléments de bloc profilé s'étendent obliquement et délimitent les éléments de bloc profilé dans la direction périphérique,
- dans lequel les éléments de bloc profilé de cette rangée de blocs profilés sont configurés dans la direction axiale avec des bords longitudinaux qui délimitent latéralement les éléments de bloc profilé,
- et dans lequel les éléments de bloc profilé de la rangée de blocs profilés sont configurés avec plusieurs lamelles séparées les unes des autres et qui s'étendent sur l'élément de bloc profilé, l'orientation des lamelles formant un angle compris entre 80 et 110° par rapport à la plus longue diagonale du trapèze formé par les bords transversaux et les bords longitudinaux.

6. Profilé asymétrique de surface de roulement d'un pneu d'hiver selon les caractéristiques d'une ou plusieurs des revendications précédentes,
- dans lequel les rangées de blocs profilés sont prévues dans les épaulements du pneu, au moins une autre rangée de blocs profilés étant réalisée entre les épaulements du pneu, les rangées de blocs profilés étant toutes formées d'éléments de bloc profilé disposés les uns derrière les autres dans la direction périphérique et séparés les uns des autres par des rainures transversales qui s'étendent obliquement de telle sorte que les bords transversaux des éléments de bloc profilé s'étendent obliquement et délimitent les éléments de bloc profilé dans la direction périphérique,
- dans lequel les éléments de bloc profilé des rangées de blocs profilés sont configurés dans la direction axiale avec des bords longitudinaux qui délimitent les éléments de bloc profilé,
- dans lequel les éléments de bloc profilé des rangées de blocs profilés sont configurés avec plusieurs lamelles séparées les unes autres et qui s'étendent sur l'élément de bloc profilé,
- les lamelles des rangées de blocs profilés des épaulements ayant une orientation parallèle aux rainures transversales qui délimitent dans la direction périphérique les éléments de bloc profilé de la série de blocs profilés de l'épaulement concerné et
- dans lequel les lamelles de la rangée de blocs profilés réalisées entre les rangées de blocs profilés des épaulements sont orientées sous un angle de 80 à 110° par rapport à la diagonale principale du trapèze formé par les bords transversaux et les bords longitudinaux.

7. Profil asymétrique de surface de roulement d'un pneu d'hiver selon les caractéristiques d'une ou plusieurs des revendications précédentes, **caractérisé en ce que** des éléments (33, 34) de bloc profilé délimités par les rainures périphériques (7, 8) sont délimités l'un par rapport à l'autre par des rainures transversales (11, 12), les rainures transversales (11) s'étendant obliquement et présentant une largeur de 1 à 2 mm et les rainures transversales (12) s'étendant obliquement et présentant une largeur de 3 à 8 mm.

8. Profil asymétrique de surface de roulement d'un pneu d'hiver selon les caractéristiques d'une ou plusieurs des revendications précédentes, **caractérisé en ce que** les éléments (33, 34) de bloc profilé des rangées (3, 4) de blocs profilés sont configurés de telle sorte qu'ils s'étendent axialement jusque dans la rangée (3; 4) de blocs profilés voisine de telle sorte qu'entre ces rangées (3, 4) de blocs profilés il n'y a pas de section transversale libre de rainure dans la direction périphérique.

9. Profil asymétrique de surface de roulement d'un pneu d'hiver selon les caractéristiques de la revendication 1,
- dans lequel tant le facteur de structure dans la direction périphérique que le facteur de structure dans la direction transversale et la direction périphérique sont de 10 à 50 % plus élevés dans les éléments de bloc profilé dans la direction axiale qui s'étend entre cette rainure périphérique et l'épaulement tourné vers le côté intérieur du véhicule lorsque le pneu est en position de fonctionnement sur le véhicule que dans les éléments de bloc profilé situés dans la partie axiale qui s'étend entre cette première rainure périphérique et l'épaulement tourné vers l'extérieur du véhicule lorsque le pneu est en position de fonctionnement sur le véhicule.

10. Profil asymétrique de surface de roulement d'un pneu d'hiver selon les caractéristiques des revendications 1 ou 2,
- dans lequel le pas dans la partie axiale qui s'étend entre la première rainure périphérique et l'épaulement qui est tourné vers l'intérieur du véhicule lorsque le pneu est en position de fonctionnement sur le véhicule est plus grand que dans la partie axiale qui s'étend entre cette première rainure périphérique et l'épaulement tourné vers l'extérieur du véhicule lorsque le pneu est en position de fonctionnement sur le véhicule.

11. Profil asymétrique de surface de roulement d'un pneu d'hiver selon les caractéristiques d'une ou plusieurs des revendications précédentes,
- dans lequel une autre rangée de blocs profilés qui est séparée par une rainure périphérique de la rangée de blocs profilés qui est formée dans l'épaulement tourné vers l'intérieur du véhicule lorsque le pneu est en position de fonctionnement sur le véhicule est formée dans la partie axiale qui s'étend entre cette première rainure périphérique et l'épaulement tourné vers le côté intérieur du véhicule lorsque le pneu est en position de fonctionnement sur le véhicule,
- ces deux rangées voisines de blocs profilés étant toutes deux formées d'éléments de bloc profilé disposés les uns derrière les autres dans la direction périphérique et séparés les uns des autres par des rainures transversales qui s'étendent obliquement de telle sorte que les bords transversaux des éléments de bloc profilé s'étendent obliquement et délimitent les éléments de bloc profilé dans la direction périphérique, les rainures transversales s'étendant sous une pente constante dans les deux rangées de blocs profilés, axialement vers l'intérieur en partant des épaulements du pneu, les rainures transversales étant décalées les unes par rapport aux autres dans la direction périphérique à l'endroit où elles traversent la rainure périphérique de telle sorte que l'extrémité de la rainure transversale tournée vers la rainure périphérique prend dans la rangée de blocs d'épaulement la même position périphérique que l'extrémité de la rainure transversale tournée vers la rainure périphérique dans l'autre rangée de blocs profilés.
